# EUROPEAN PATENT APPLICATION

(11) **EP 4 811 451 A1**
(43) Date of publication of application: **23.09.2026**
(21) Application number: 23958780.1
(22) Date of filing: 13.11.2023
(51) Int. Cl.: H01M 4/485, C01B 33/32, H01M 4/36, H01M 4/38

(54) **SILICON COMPOSITE CONTAINING METALLIC ELEMENT**

(71) Applicant: OSAKA Titanium Technologies Co., Ltd., Amagasaki-shi, Hyogo 660-8533 (JP)
(72) Inventor: KASHITANI, Yusuke, Amagasaki-shi, Hyogo 660-8533 (JP); SUENAGA, Hiroshi, Amagasaki-shi, Hyogo 660-8533 (JP)
(74) Representative: TBK
(86) International application number: PCT/JP2023/040677
(87) International publication number: WO 2025/104766

(57) **Abstract**

An object of the present invention is to provide a negative electrode active material for lithium-ion batteries that improves initial efficiency while maintaining the rate characteristics of the lithium-ion battery. A silicon-based composite containing a metallic element according to a first aspect of the present invention includes a silicon phase and a silicate phase. The silicon phase is formed from silicon (Si). The silicate phase is adjacent to the silicon phase. Further, the silicon-based composite containing a metallic element has a composition of LiₓMg_{y}SiO_{z} (x>0, y>0, z>0). Here, the composition satisfies all of the following conditions: (a) (2.5x + 2y)/z > 1, (b) (1.5x + y)/z < 1, and (c) (x + 2y)/z < 1.

## Description

### TECHNICAL FIELD

This invention relates to silicon composites containing a metallic element.

### BACKGROUND ART

Silicon-based compounds are used as high-capacity negative electrode active materials in lithium-ion batteries. Examples of silicon-based compounds used as negative electrode active materials include silicon oxide (SiO) (e.g., see Japanese Patent Publication No. H6-325765), lithium-doped silicon oxide (e.g., see Japanese Patent Publication No. H6-325765), magnesium-doped silicon oxide (e.g., see Japanese Patent Publication No. 2018-519648), and lithium-magnesium-doped silicon oxide (e.g., see Japanese Patent Publication No. 2017-204374).

### Prior Art Documents

### Patent documents

Patent Document 1: Japanese Patent Publication No. H6-325765
Patent Document 2: Japanese Patent Publication No. 2017-204374
Patent Document 3: Japanese Patent Publication No. 2018-519648

### DISCLOSURE OF INVENTION

### TECHNICAL PROBLEM

However, none of the silicon-based compounds used as negative electrodes simultaneously satisfies the initial efficiency and rate characteristics of lithium-ion batteries.

An object of the present invention is to provide a negative electrode active material for lithium-ion batteries that improves initial efficiency while maintaining the rate characteristics of the lithium-ion battery.

### SOLUTION TO PROBLEM

A silicon-based composite containing a metallic element according to one aspect of the present invention includes a silicon phase and a silicate phase. The silicon phase is formed from silicon (Si). The silicate phase is adjacent to the silicon phase. Further, the silicon-based composite containing a metallic element has a composition of LiₓMg_{y}SiO_{z} (x>0, y>0, z>0). Here, the composition satisfies all of the following conditions: (a) (2.5x + 2y)/z > 1, (b) (1.5x + y)/z < 1, and (c) (x + 2y)/z < 1.

As a result of diligent research by the inventors of the present application, it has become clear that when the above-mentioned silicon-based composite containing a metallic element is used as the negative electrode active material for a lithium-ion battery, the initial efficiency is improved while maintaining the rate characteristics of the lithium-ion battery.

Note that in the above-mentioned silicon-based composite containing a metallic element , it is preferable that 0.5 < z < 1.5 is satisfied. This is because using the silicon-based composite containing a metallic element as the negative electrode active material for a lithium-ion battery allows for inhibiting or reducing the deterioration of the lithium-ion battery's lifespan characteristics and furthermore, prevents a decrease in the battery's charge and discharge capacity due to an excess of the silicate phase.

Further, in the above-mentioned silicon-based composite containing a metallic element, it is preferable that x > 0.1 and y > 0.05 is satisfied. This is because when x and y satisfy these conditions, using a silicon-based composite containing a metallic element as the negative electrode active material for a lithium-ion battery allows for inhibiting or reducing silicon crystal growth, thereby preventing a decrease in the initial efficiency of the lithium-ion battery, and also allow for good water resistance during electrode assembly.

Further, in the above-mentioned silicon-based composite containing a metallic element, it is preferable that the silicate phase does not contain Li₄SiO₄ and Li₂O as crystals. This is because these substances react with carbon dioxide and moisture in the atmosphere to produce lithium carbonate and lithium hydroxide, making them chemically unstable; furthermore, their poor water resistance could hinder the manufacturing of lithium-ion batteries.

Further, it is preferable that at least a portion of the surface of the above-mentioned silicon-based composite containing a metallic element is covered with a conductive carbon film. This is because using the silicon-based composite containing a metallic element as a negative electrode active material allows for maintaining good charge and discharge capacity of lithium-ion batteries while imparting good conductivity to the silicon-based composite containing a metallic element and preventing side reactions of silicon oxide.

### BRIEF DESCRIPTION OF DRAWINGS

FIG. 1 is a triangular phase diagram of silicon composites containing a metallic element according to an embodiment of the present invention.
FIG. 2 is a schematic diagram of a manufacturing device for silicon composites containing a metallic element according to an embodiment of the present invention.

### REFERENCE SIGNS LIST

100 Vapor deposition device
110 Crucible
120 Heater
130 Vapor deposition drum
141 Scraper
143 Particle guide
150 Chamber
151 Chamber body
152 Recovery section
153 Exhaust pipe
160 Raw material supply hopper
170 Raw material introduction pipe
180 Recovery container
190 Recovery pipe
Gg Gas guide
OP Opening
RM Deposition chamber
Sr Molten metal
VL1 First valve
VL2 Second valve

### DESCRIPTION OF EMBODIMENTS

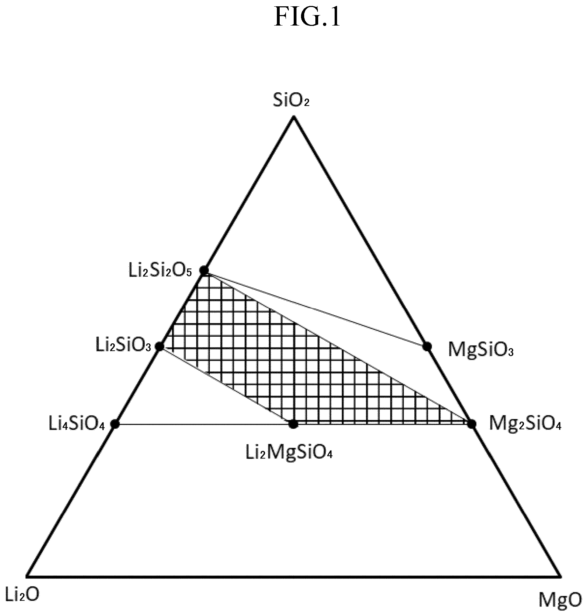

A silicon-based composite containing a metallic element according to an embodiment of the present invention comprises a silicon phase and a silicate phase. The silicon phase is formed from silicon (Si). The silicate phase is adjacent to the silicon phase. This silicon-based composite containing a metallic element has a composition of LiₓMg_{y}SiO_{z} (x>0, y>0, z>0). Note that, in the above composition, it is presumed that three of the following phases are in equilibrium: Li₂Si₂O₅, Li₂SiO₃, Mg₂SiO₄, and Li₂MgSiO₄. When this equilibrium relationship is represented as a triangular phase diagram, it is as shown in FIG. 1. In other words, the region indicated by hatching in FIG. 1 is the equilibrium region. Here, the composition satisfies all of the following conditions: (a) (2.5x + 2y)/z > 1, (b) (1.5x + y)/z < 1, and (c) (x + 2y)/z < 1. Note that satisfying the condition (a) allows for exhibiting excellent initial efficiency and rate characteristics for the lithium-ion battery, satisfying the conditions (b) and (c) allows for inhibiting or reducing the formation of chemically unstable phases such as Li₄SiO₄ and Li₂O. Further, here, (2.5x + 2y)/z may be within a range from greater than 1 to less than 1.75, or within a range from greater than 1.1 to less than 1.5. Further, (1.5x + y)/z may be within a range from greater than 0.5 to less than 1, or within a range from greater than 0.5 to less than 0.9. Further, (x+2y)/z may be within a range from greater than 0.4 to less than 1, within a range from greater than 0.5 to less than 0.9, or within a range from greater than 0.6 to less than 0.8. Furthermore, the silicate phase can exist in a crystalline, amorphous, or partially crystalline (partially amorphous) state. Incidentally, the silicate phase does not necessarily coincide with the equilibrium phase in terms of composition. For example, since lithium silicate crystallizes more readily at lower temperatures than magnesium silicate, both a crystalline phase of lithium silicate and a magnesium-rich amorphous phase may form. Further, although the cause is unclear, MgSiO₃ crystals, which are not present in the equilibrium phase, may sometimes be observed. In particular, when the recovery temperature or heat treatment temperature of silicon-based composites containing a metallic element is low, it is presumed that some of them become amorphous, or that slight concentration variations in the silicate phase lead to the formation of MgSiO₃ crystals as a metastable phase.

Note that the composition of the silicate phase according to an embodiment of the present invention can also be expressed as m(Li₂O)·n(MgO)·SiO₂. Further, in the composition, it is preferable that all of the following conditions are satisfied: (e) 2m + 0.5n > 1, (f) m < 1, and (g) m + n < 2. Note that 2m + 0.5n may be within a range from greater than 1 to less than 1.7, or within a range from greater than 1.1 to less than 1.7. Further, m may be within a range from greater than 0.45 to less than 1, within a range from greater than 0.45 to less than 0.9, or within a range from greater than 0.45 to less than 0.8. Further m+n may be within a range from greater than 0.9 to less than 2, within a range from greater than 0.9 to less than 1.9, within a range from greater than 0.9 to less than 1.7, within a range from greater than 0.9 to less than 1.5, or within a range from greater than 0.9 to less than 1.3.

Incidentally, the shape of the silicon-based composite containing a metallic element according to an embodiment of the present invention should not be limited and may be in powder form, granular form, lump form, or any other form. However, when a silicon-based composite containing a metallic element is used as the negative electrode active material for a lithium-ion battery, it is preferable that it be in powder form.

Incidentally, using the above-mentioned silicon-based composite containing a metallic element as the negative electrode active material for a lithium-ion battery allows for obtaining an initial efficiency higher than that of conventional lithium-ion batteries while maintaining the same rate characteristics as conventional lithium-ion batteries.

Note that when the above-mentioned silicon-based composite containing a metallic element is used as the negative electrode active material for a lithium-ion battery, it is preferable that 0.5 < z < 1.5 be satisfied. This is because it can inhibit or reduce the deterioration of the lifespan characteristics of lithium-ion batteries, and also inhibit or reduce the decrease in the charge and discharge capacity of lithium-ion batteries caused by an excess of the silicate phase. Further, z is preferably within a range from greater than 0.6 to less than 1.4, more preferably within a range from greater than 0.7 to less than 1.3, even more preferably within a range from greater than 0.8 to less than 1.2, and particularly preferably within a range from greater than 0.9 to less than 1.1.

Further, when the above-mentioned silicon-based composite containing a metallic element is used as the negative electrode active material for a lithium-ion battery, it is preferable that x > 0.1 and y > 0.05 be satisfied. This is because when x and y satisfy these conditions, it is possible to inhibit or reduce the growth of silicon crystals, thereby preventing a decrease in the initial efficiency of lithium-ion batteries, and also to exhibit good water resistance during electrode assembly. Note that x may be greater than 0.2, greater than 0.3, greater than 0.4, greater than 0.5, greater than 0.6, greater than 0.7, greater than 0.8, or greater than 0.9. Further, y may be greater than 0.1, greater than 0.2, greater than 0.3, greater than 0.4, greater than 0.5, greater than 0.6, or greater than 0.7.

Further, when the above-mentioned silicon-based composite containing a metallic element is used as the negative electrode active material for a lithium-ion battery, it is preferable that m > 0.1 and n > 0.1 be satisfied. This is because when m and n satisfy these conditions, it is possible to inhibit or reduce the growth of silicon crystals, thereby preventing a decrease in the initial efficiency of lithium-ion batteries, and also to exhibit good water resistance during electrode assembly. Note that m may be greater than 0.2, greater than 0.3, greater than 0.4, greater than 0.5, greater than 0.6, greater than 0.7, greater than 0.8, or greater than 0.9. Further, n may be greater than 0.2, greater than 0.3, greater than 0.4, greater than 0.5, greater than 0.6, greater than 0.7, greater than 0.8, or greater than 0.9. Further, even when the composition is expressed as m(Li₂O)·n(MgO)·SiO₂, it is preferable that 0.5 < O/Si < 1.5 be satisfied. This is because it can inhibit or reduce the deterioration of the lifespan characteristics of lithium-ion batteries, and also inhibit or reduce the decrease in the charge and discharge capacity of lithium-ion batteries caused by an excess of the silicate phase. Further, the O/Si ratio is preferably within a range from greater than 0.6 to less than 1.4, more preferably within a range from greater than 0.7 to less than 1.3, even more preferably within a range from greater than 0.8 to less than 1.2, and particularly preferably within a range from greater than 0.9 to less than 1.1.

Further, when the above-mentioned silicon-based composite containing a metallic element is used as the negative electrode active material for a lithium-ion battery, it is preferable that the silicate phase does not contain Li₄SiO₄ and Li₂O as crystals. This is because these substances react with carbon dioxide and moisture in the atmosphere to produce lithium carbonate and lithium hydroxide, making them chemically unstable, and furthermore, their poor water resistance could hinder the manufacturing of lithium-ion batteries.

Further, when the above-mentioned silicon-based composite containing a metallic element is used as the negative electrode active material for a lithium-ion battery, it is preferable to cover at least a portion of the surface of the silicon-based composite containing a metallic element with a conductive carbon film. This is because it is possible to maintain good charge and discharge capacity of lithium-ion batteries while imparting good conductivity to silicon-based composites containing a metallic element and inhibiting or reducing side reactions of silicon oxide. Note that in order to enjoy this effect, it is preferable that the mass ratio of the mass of carbon in the conductive carbon film to the mass of the silicon composite containing a metallic element be within a range from 0.5% by mass or more to 20% by mass or less, more preferably within a range from 0.5% by mass or more to 10% by mass or less, and even more preferably within a range from 0.5% by mass or more to 5% by mass or less.

A method for producing a silicon-based composite containing a metallic element according to an embodiment of the present invention will now be described in detail.

Examples of methods for producing silicon-based composites containing a metallic element according to an embodiment of the present invention include (i) a method of doping silicon oxide with lithium and magnesium, (ii) a method of compounding silicon and silicate by mechanical milling, and (iii) a method of mixed vapor deposition of SiO gas, Li gas, and Mg gas (hereinafter may be referred to as the "mixed vapor deposition method"); however, in terms of productivity of silicon-based composites containing a metallic element and the uniformity of the resulting silicon-based composites containing a metallic element, it is preferable to employ the mixed vapor deposition method.

Incidentally, raw materials used in the production of metallic element-containing silicon oxide are silicon and metal silicates. Here, metal silicates include lithium (Li) and magnesium (Mg). In other words, as the metal silicate, a metal silicate containing both lithium and magnesium may be used alone, or a silicate containing lithium and a silicate containing magnesium may be used in combination. Note that examples of silicates containing lithium include lithium disilicate Li₂Si₂O₅. Examples of silicates containing magnesium include magnesium silicate (MgSiO₃). Further, the metal silicate may be a mixture of metal oxide and silicon oxide. For example, lithium disilicate Li₂Si₂O₅ may be a mixture of Li₂O and 2SiO₂, and magnesium silicate MgSiO₃ may be a mixture of MgO and SiO₂. Further, in order to include metallic elements other than lithium and magnesium in the silicon-based composite containing a metallic element, the raw material metal silicate phase may contain oxides having metallic elements other than lithium and magnesium. Such metallic elements are not particularly limited, but when a mixed vapor deposition method is used as a method for producing silicon oxide containing a metallic element, examples include alkali metals, alkaline earth metals, zinc, and boron, depending on the vapor pressure of the metallic elements and oxides. Silicon and metal silicates may be in powder form, granular form, lump form, or any other form.

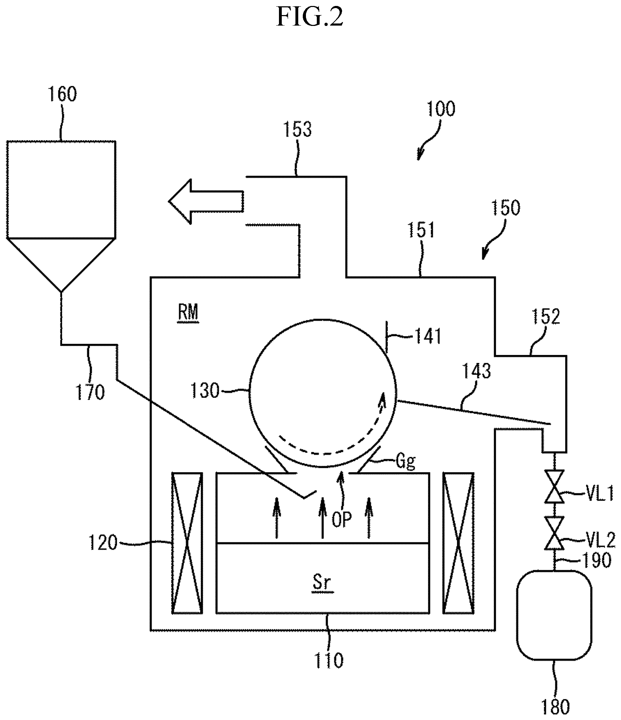

Further, in the above-described mixed vapor deposition method, it is preferable to use a vapor deposition device 100 as shown in FIG. 2, from the viewpoint of reducing manufacturing costs. Thus, the vapor deposition device 100 will be described first, and then the above-mentioned mixed vapor deposition method will be described in detail.

As shown in FIG. 2, the vapor deposition device 100 mainly includes a crucible 110, a heater 120, a vapor deposition drum 130, a scraper 141, a particle guide 143, a chamber 150, a raw material supply hopper 160, a raw material introduction pipe 170, a recovery container 180, a first valve VL1, and a second valve VL2.

The crucible 110 is a heat-resistant container with an opening in the center of its top wall, as shown in FIG. 2, and is installed in the chamber 150. Further, a through-hole (not shown) is formed in one location around the top wall of the crucible 110, and the raw material introduction pipe 170 is inserted through the through-hole. In other words, the raw materials in the raw material supply hopper 160 are supplied to the crucible 110 through the raw material introduction pipe 170. Further, a gas guide Gg is installed on the upper side of the top wall of the crucible 110. The gas guide Gg is a component that guides the raw material gas generated in the crucible 110 to the vapor deposition drum 130, and as shown in FIG. 2, it is installed on the upper surface of the top wall so as to surround the central part of the top wall.

The heater 120 is for heating the crucible 110 to a high temperature and is disposed to surround the outer circumference of the crucible 110.

The vapor deposition drum 130 is, for example, a cylindrical horizontal drum, and as shown in FIG. 2, is disposed above the opening OP in the top wall of the crucible 110, with its lower part surrounded by a gas guide Gg. The vapor deposition drum 130 is driven to rotate in one direction by a drive mechanism (not shown). Note that the vapor deposition drum 130 is equipped with a temperature controller (not shown) for maintaining its outer surface at a constant temperature. The temperature controller cools the outer surface temperature of the vapor deposition drum 130 to a temperature suitable for vapor deposition of the vapor deposition source gas using a cooling medium supplied from an external source. Further, the outer surface temperature of the vapor deposition drum 130 can affect the crystallinity of precipitates deposited on top of precipitates remaining on the vapor deposition drum. Controlling the temperature of the outer surface of the vapor deposition drum 130 to an appropriate range allows for inhibiting or reducing the progression of crystal growth due to disproportionation reactions. Note that the outer surface temperature of the vapor deposition drum 130 is preferably 900°C or lower, more preferably within a range of 800°C or lower, and particularly preferably within a range of 700°C or lower.

The scraper 141 is a component that plays the role of scraping off the thin film formed on the vapor deposition drum from the vapor deposition drum 130, and is disposed near the vapor deposition drum 130 as shown in FIG. 2. The thin film fragments (metallic element-containing silicon-based composite particles) scraped off by the scraper 141 fall onto the particle guide 143. Further, the material of the scraper 141 affects the contamination of metallic element-containing silicon-based composite particles with impurities. From the viewpoint of inhibiting or reducing such effects, the material of the scraper 141 is preferably a high-hardness metal or ceramic, and is particularly preferably a ceramic. Further, it is preferable that the scraper 141 does not come into contact with the outer surface of the vapor deposition drum 130. This is because it prevents contamination of the recovered metallic element-containing silicon-based composite particles with impurities that may occur due to direct contact between the vapor deposition drum 130 and the scraper 141.

The particle guide 143 is, for example, a vibrating transport member, and as shown in FIG. 2, is disposed to be inclined downward as it moves from the vicinity of the vapor deposition drum toward the recovery section 152 of the chamber 150; the particle guide 143 receives thin film fragments scraped off by the scraper 141, which is disposed above it, and feeds them to the recovery section 152 of the chamber 150.

As shown in FIG. 2, the chamber 150 mainly includes a chamber body 151, a recovery section 152, and an exhaust pipe 153. As shown in FIG. 2, the chamber body 151 is a box-shaped portion having a deposition chamber RM inside, and houses a crucible 110, a heater 120, a vapor deposition drum 130, a scraper 141, and a particle guide 143. As shown in FIG. 2, the recovery section 152 is a portion that protrudes outward from the side wall of the chamber body 151 and has a space that communicates with the deposition chamber RM of the chamber body 151. As described above, the tip of the particle guide 143 is located in the recovery section 152.

The raw material supply hopper 160 is a raw material supply source, and as shown in FIG. 2, its outlet is connected to the raw material introduction pipe 170. In other words, the raw materials introduced into the raw material supply hopper 160 are supplied to the crucible 110 via the raw material introduction pipe 170 at an appropriate time. The raw materials supplied to crucible 110 become molten Sr, which then vaporizes to become raw material gas.

The raw material introduction pipe 170 is a round-hole nozzle for supplying solid raw materials that have been introduced into the raw material supply hopper 160 to the crucible 110, and is disposed so as to face upwards in the central part of the top plate of the crucible 110.

The recovery container 180 is a container for recovering thin film fragments that have passed through the first valve VL1 and the second valve VL2.

The first valve VL1 and the second valve VL2 are used to adjust the amount of thin film fragments recovered into the recovery container 180 by opening and closing them, and are provided in the recovery pipe 190 that connects the recovery section 152 of the chamber 150 and the recovery container 180.

The raw materials (mixed powder or granulated material) are fed from the raw material supply hopper 160 to the crucible 110 via the raw material introduction pipe 170, or alternatively the raw materials are fed directly into the crucible 110. Note that the raw materials for the silicon-based composite containing a metallic element are as described above, and the raw material gases SiO gas, Li gas, and Mg gas are generated by heating them to a temperature within a range from 1200°C or more to 1400°C or less.

Once the raw materials are placed in the crucible 110, the crucible 110 is heated by the heater 120 while reducing the pressure inside the deposition chamber RM. Note that if the pressure inside the deposition chamber RM is too high, the reaction that generates SiO gas from the raw materials will be less likely to occur. Thus, the pressure inside the deposition chamber RM is preferably 1000 Pa or less, more preferably 750 Pa or less, and particularly preferably 20 Pa or less. Further, the temperature inside the deposition chamber RM affects the reaction rate of SiO; if the temperature is too low, the reaction rate will be slow, whereas if the temperature is too high, there are concerns about side reactions due to the melting of the raw materials and a decrease in energy efficiency. Further, if the temperature is too high, there are also concerns that crucible 110 could be damaged. From this perspective, the temperature inside the deposition chamber RM is preferably within a range form 1000°C or more to 1600°C or less, more preferably within a range from 1100°C or more to 1500°C or less, and particularly preferably within a range from 1100°C or more to 1400°C or less.

As described above, heating the raw materials under reduced pressure causes raw material gas to be generated from the raw materials in the crucible 110, and then the raw material gas is supplied to the vapor deposition drum 130 through the gas guide Gg. During this process, the vapor deposition drum 130 is rotated by a power source. Note that the temperature of the outer surface of the vapor deposition drum 130 is set lower than the temperature inside the deposition chamber RM. More specifically, the temperature is set lower than the condensation temperature of the source gas. With this configuration, the raw material gas generated from the crucible 110 is deposited and accumulates on the outer surface of the rotating vapor deposition drum 130. Here, while keeping the scraper 141 in a standby position above, the vapor deposition drum 130 is rotated multiple times to form a laminated film on the vapor deposition drum 130. Subsequently, once the rotation speed of the vapor deposition drum 130 reaches a specified value, the scraper 141 is moved downward, and then the laminated film is scraped off from the vapor deposition drum 130 by the scraper 141. The scraped-off fragments of the laminated film fall along the outer surface of the vapor deposition drum 130 onto the particle guide 143. Finally, fragments of this laminated film are crushed to obtain the desired silicon-based composite containing a metallic element.

Incidentally, the silicon-based composite containing a metallic element obtained as described above may be heat-treated. Heat-treating a silicon-based composite containing a metallic element under reduced pressure or an inert gas atmosphere allows for stabilizing the crystalline state of the silicon-based composite containing a metallic element. Such heat treatment should preferably be performed at a temperature between 500°C or more and 900°C or less. Treatment at temperatures at 500°C or more facilities crystallization of the silicate phase contained in the silicon-based composite containing a metallic element, thereby stabilizing its crystal structure and physical properties. Further, keeping the heat treatment temperature at 900°C or less inhibits or reduces excessive crystallization of the silicon phase contained in the silicon composite containing a metallic element, thereby maintaining good battery characteristics. The heat treatment may be performed at any time after the fragments of the laminated film have been recovered and then the fragments have been crushed. In particular, it is desirable to perform the heat treatment without exposure to the atmosphere after the fragments of the laminated film have been recovered, thereby inhibiting or reducing oxidation reactions and degradation during storage in the atmosphere or when the fragments are crushed. In addition, a conductive carbon coating can be applied simultaneously with the heat treatment.

WORKING EXAMPLEs and COMPARATIVE EXAMPLEs are shown below to illustrate the present invention in more detail, but the present invention should not be limited to these EXAMPLEs.

### WORKING EXAMPLE 1

### 1. Production of Li-Mg-containing silicon dioxide composite powder

The target Li-Mg-containing silicon dioxide composite powder was produced by sequentially performing the following processes.

### (1) Raw material powder preparation process

A raw material powder with a composition of Li_{0.41}Mg_{0.17}SiO was obtained by blending lithium oxide, lithium silicate, magnesium silicate, and silicon dioxide such that for every 1 mol of metallic silicon, 0.3 mol of lithium oxide (Li₂O), 0.25 mol of magnesium oxide (MgO), and 0.45 mol of silicon dioxide (SiO₂) were contained.

### (2) Manufacturing process for Li-Mg-containing silicon dioxide composite

A Li-Mg-containing silicon oxide composite was produced using the vapor deposition device 100 shown in FIG. 1, according to the method for producing a silicon-based composite containing a metallic element described above. Note that during the process, the heater 120 was controlled so that the heater temperature, i.e., the raw material heating temperature, was between 1200°C and 1400°C, and a vacuum device was controlled so that the internal pressure of the chamber 150 was 100 Pa or less. Further, the recovered fragments of the laminated film were heat-treated at 600-700°C under an argon atmosphere to stabilize their crystal structure.

### (3) Crashing process

The Li-Mg-containing silicon dioxide composite obtained as described above was pulverized in the atmosphere using a bead mill until the average particle size D50 was approximately 9 µm, and then the particle size was adjusted to obtain the desired Li-Mg-containing silicon dioxide composite powder. Note that when the average particle size D50 was measured using a laser diffraction particle size distribution analyzer (Mastersizer 3000 manufactured by Malvern), it was found to be 9.04 µm. Further, the measurement conditions were as follows.
- Dispersion medium: Isopropyl alcohol (2-propanol)
- Particle refractive index: 3.500
- Particle absorption rate: 1.000
- Refractive index of dispersion medium: 1.390

### 2. Composition analysis

The Li-Mg-containing silicon oxide composite powder obtained as described above was analyzed using an ICP emission spectrometer (ICP-AES) to determine the content of silicon, lithium, and magnesium. Further, while the oxygen content can be determined using an inert gas fusion type oxygen analyzer, the Li-Mg-containing silicon oxide composite powder contains almost no elements other than silicon, lithium, magnesium, and oxygen; and since almost no impurities were detected by ICP emission spectrometry, the oxygen content was determined by assuming that all other contained elements were oxygen.

As a result, the composition of the obtained Li-Mg-containing silicon dioxide composite powder was determined to be Li 0.46 Mg 0.19 SiO 1.11. Thus, in LiₓMg_{y}SiO_{z}, (2.5x + 2y)/z = 1.39, (1.5x + y)/z = 0.80, and (x + 2y)/z = 0.77 were satisfied.

Further, when the composition was given as m(Li₂O)·n(MgO)·SiO₂, m was 0.674 and n was 0.569. Thus, 2m + 0.5n equals 1.632, and m + n equals 1.243. Further, in this case, the number of oxygen atoms relative to the number of silicon atoms (O/Si) was 1.11.

Further, X-ray diffraction (XRD) confirmed that Li₄SiO₄ and Li₂O were not present as crystals in the Li-Mg-containing silicon dioxide composite powder. Note that in this measurement, Cu-Kα rays were used as the characteristic X-ray, and the diffraction angle interval was set to 0.13°.

3. Characteristics of a battery equipped with a negative electrode made of Li-Mg-containing silicon dioxide composite powder

### (1) Battery fabrication

### (1-1) Fabrication of the negative electrode

The Li-Mg-containing silicon dioxide composite powder obtained as described above was loaded into a rotary kiln, and a carbon coating process was performed on the powder using thermal CVD by circulating argon and propane gases at 700°C. Note that the mass ratio of carbon to the mass of the Li-Mg-containing silicon dioxide composite powder was 2.31% by mass. Note that the mass ratio was calculated from the results of quantitative evaluation of carbon content by analyzing carbon dioxide gas using an oxygen-flow combustion-infrared absorption method with a carbon concentration analyzer (CS400 manufactured by Leco). Next, a mixture of the carbon-coated Li-Mg-containing silicon oxide composite powder (hereinafter referred to simply as the "carbon-coated powder") and graphite powder in a mass ratio of 4:1 was used as the anode active material. Next, the following components were added into Awatori Neritaro (registered trademark) ARE-310, manufactured by Shinky Co., Ltd.: (1) an anode active material, (2) styrene-butadiene rubber (SBR) as a binder, (3) carboxymethyl cellulose (CMC) as a binder, and (4) carbon nanotubes (CNT) as a conductivity enhancer; (1) the negative electrode active material, (2) an aqueous dispersion of styrene-butadiene rubber (SBR), (3) an aqueous dispersion of carboxymethyl cellulose (CMC), and (4) carbon nanotubes (CNT) were added such that the mass ratio of the above components is 89.8:9:1:0.2, and then these components were kneaded to prepare an aqueous slurry. Next, the slurry was applied to a 10 µm thick copper foil, and after pre-drying the coating at 80°C in the atmosphere, the slurry-coated copper foil was punched out into a disc shape with a diameter of 11 mm. Then, the disc-shaped slurry-coated copper foil was dried in a vacuum at 150°C for 12 hours to obtain the desired negative electrode.

### (1-2) Battery fabrication

A coin cell was fabricated using the above-mentioned negative electrode, lithium iron phosphate positive electrode material as the counter electrode, separator, and electrolyte. Note that a porous polyethylene film with a thickness of 20 µm was used as the separator, and the electrolyte was a solution prepared by dissolving lithium hexafluoride phosphate (LiPF₆) at a concentration of 1 mol/L in a mixture of ethylene carbonate (EC) and diethyl carbonate (DEC) in a volume ratio of 1:1.

### (2) Rate characteristics

Using a secondary battery charge/discharge test device manufactured by Electrofield Co., Ltd., the coin cell was subjected to charge/discharge tests to determine its initial efficiency (%); furthermore, the charge/discharge efficiency (%) for each cycle during 10 charge/discharge cycles was also determined, and the average value was used as the rate characteristic. During the charge-discharge test, the conditions for the first charge were set to "CC-CV 0.2C" and "10mV-0.01C", the conditions for the first discharge were set to "CC 0.2C" and "1.5V cut-off", the conditions for the second and subsequent charges were set to "CC-CV 1C" and "10mV-0.5C", and the conditions for the second and subsequent discharges were set to "CC 0.5C" and "1.5V cut-off". Here, the current at 1C was calculated using the theoretical capacity, which was calculated assuming that the discharge capacity of natural graphite is 360 mAh/g and the discharge capacity of the Li-Mg-containing silicon oxide composite powder is 1900 mAh/g. Note that the initial efficiency of the coin cell was 86.0%, and its rate characteristic was 99.4%.

### WORKING EXAMPLE 2

Li-containing silicon oxide composite powder was obtained by the same method as shown in WORKING EXAMPLE 1, except that lithium oxide, lithium silicate, magnesium silicate, and silicon dioxide were blended so that for every 1 mol of metallic silicon, 0.35 mol of lithium oxide (Li₂O), 0.15 mol of magnesium oxide (MgO), and 0.5 mol of silicon dioxide (SiO₂) were contained, thereby obtaining a raw material powder with a composition of Li_{0.47}Mg_{0.1}SiO; composition analysis was performed by the same method as shown in WORKING EXAMPLE 1, furthermore a coin cell was fabricated by the same method as shown in WORKING EXAMPLE 1, and then the initial efficiency (%) and rate characteristics (%) of the coin cell were measured. As a result, the composition of the obtained Li-Mg-containing silicon dioxide composite powder was determined to be Li_{0.54}Mg_{0.11}SiO_{1.08}. Thus, in LiₓMg_{y}SiO_{z}, (2.5x + 2y)/z = 1.45, (1.5x + y)/z = 0.85, and (x + 2y)/z = 0.71 were satisfied.

Further, when the composition was given as m(Li₂O)·n(MgO)·SiO₂, m was 0.786 and n was 0.324. Thus, 2m + 0.5n equals 1.698, and m + n equals 1.092. Further, in this case, the number of oxygen atoms relative to the number of silicon atoms (O/Si) was 1.08.

Further, X-ray diffraction (XRD) confirmed that Li₄SiO₄ and Li₂O were not present as crystals in the Li-Mg-containing silicon dioxide composite powder. Further, the initial efficiency of the coin cell was 85.6%, and its rate characteristic was 99.5%.

### WORKING EXAMPLE 3

Li-containing silicon dioxide composite powder was obtained by the same method as shown in WORKING EXAMPLE 1, except that lithium oxide, lithium silicate, magnesium silicate, and silicon dioxide were blended so that for every 1 mol of metallic silicon, 0.25 mol of lithium oxide (Li₂O), 0.25 mol of magnesium oxide (MgO) , and 0.5 mol of silicon dioxide (SiO₂) were contained, thereby obtaining a raw material powder with a composition of Li_{0.33}Mg_{0.17}SiO; compositional analysis was performed by the same method as shown in WORKING EXAMPLE 1, furthermore a coin cell was fabricated by the same method as shown in WORKING EXAMPLE 1, and then the initial efficiency (%) and rate characteristics (%) of the coin cell were measured. As a result, the composition of the obtained Li-Mg-containing silicon dioxide composite powder was determined to be Li_{0.36}Mg_{0.18}SiO_{1.15}. Thus, in LiₓMg_{y}SiO_{z}, (2.5x + 2y)/z = 1.11, (1.5x + y)/z = 0.63, and (x + 2y)/z = 0.63 were satisfied.

Further, when the composition was given as m(Li₂O)·n(MgO)·SiO₂, m was 0.463 and n was 0.464. Thus, 2m + 0.5n equals 1.158, and m + n equals 0.927 were satisfied. Further, the number of oxygen atoms relative to the number of silicon atoms (O/Si) was 1.15.

Further, X-ray diffraction (XRD) confirmed that Li₄SiO₄ and Li₂O were not present as crystals in the Li-Mg-containing silicon dioxide composite powder. Further, the initial efficiency of the coin cell was 86.1%, and its rate characteristic was 99.5%.

### (COMPARATIVE EXAMPLE 1)

Li-containing silicon oxide composite powder was obtained by the same method as shown in WORKING EXAMPLE 1, except that lithium oxide, lithium silicate, and silicon dioxide were blended so that for every 1 mol of metallic silicon, 0.33 mol of lithium oxide (Li₂O) and 0.67 mol of silicon dioxide (SiO₂) were contained (i.e., magnesium silicate was not added), thereby obtaining a raw material powder with a composition of Li_{0.4}SiO; composition analysis was performed by the same method as shown in WORKING EXAMPLE 1, furthermore a coin cell was fabricated by the same method as shown in WORKING EXAMPLE 1, and then the initial efficiency (%) and rate characteristics (%) of the coin cell were measured. As a result, the composition of the obtained Li-Mg-containing silicon dioxide composite powder was determined to be Li_{0.40}SiO_{0.93}. Thus, at LiₓMg_{y}SiO_{z} (y=0), (2.5x+2y)/z = 1.07, (1.5x+y)/z = 0.64, and (x+2y)/z = 0.43 were satisfied.

Further, when the composition was given as m(Li₂O)·n(MgO)·SiO₂, m was 0.548 and n was 0.000. Thus, 2m + 0.5n equals 1.096, and m + n equals 0.548. Further, the number of oxygen atoms relative to the number of silicon atoms (O/Si) was 0.93.

Further, X-ray diffraction (XRD) confirmed that Li₄SiO₄ and Li₂O were not present as crystals in the Li-Mg-containing silicon dioxide composite powder. Further, the initial efficiency of this coin cell was 82.8%, and its rate characteristic was 99.1%.

### (COMPARATIVE EXAMPLE 2)

Li-containing silicon oxide composite powder was obtained by the same method as shown in WORKING EXAMPLE 1, except that lithium oxide, lithium silicate, magnesium silicate, and silicon dioxide were blended so that for every 1 mol of metallic silicon, 0.2125 mol of lithium oxide (Li₂O), 0.2125 mol of magnesium oxide (MgO), and 0.575 mol of silicon dioxide (SiO₂) were contained, thereby obtaining a raw material powder with a composition of Li_{0.27}Mg_{0.13}SiO; compositional analysis was performed by the same method as shown in WORKING EXAMPLE 1, furthermore a coin cell was fabricated by the same method as shown in WORKING EXAMPLE 1, and then the initial efficiency (%) and rate characteristics (%) of the coin cell were measured. As a result, the composition of the obtained Li-Mg-containing silicon dioxide composite powder was determined to be Li_{0.31}Mg_{0.16}SiO_{1.29}. Thus, in LiₓMg_{y}SiO_{z}, (2.5x + 2y)/z = 0.85, (1.5x + y)/z = 0.49, and (x + 2y)/z = 0.49 were satisfied.

Further, when the composition was given as m(Li₂O)·n(MgO)·SiO₂, m was 0.322 and n was 0.324. Thus, 2m + 0.5n equals 0.806, and m + n equals 0.646. Further, the number of oxygen atoms relative to the number of silicon atoms (O/Si) was 1.29.

Further, X-ray diffraction (XRD) confirmed that Li₄SiO₄ and Li₂O were not present as crystals in the Li-Mg-containing silicon dioxide composite powder. Further, the initial efficiency of this coin cell was 84.7%, and its rate characteristic was 99.4%.

The results shown in WORKING EXAMPLEs 1 to 3 and COMPARATIVE EXAMPLEs 1 and 2 are summarized in the following Tables 1 to 3.

As is clear from Table 3, the coin cells shown in WORKING EXAMPLEs 1 to 3 exhibit superior initial efficiency and rate characteristics compared to the coin cell of COMPARATIVE EXAMPLE 1, which has a negative electrode made of a negative electrode active material that does not contain magnesium, and superior initial efficiency compared to the coin cell of COMPARATIVE EXAMPLE 2, which has a negative electrode made of a negative electrode active material with low lithium and magnesium content.

**[Table 1]**

| | **x** | **y** | **z** | **(2.5x+2y)/z** | **(1.5x+y)/z** | **(x+2y)/z** |
|---|---|---|---|---|---|---|
| **WORKING EXAMPLE 1** | **0.46** | **0.19** | **1.11** | **1.39** | **0.80** | **0.77** |
| **WORKING EXAMPLE 2** | **0.54** | **0.11** | **1.08** | **1.45** | **0.85** | **0.71** |
| **WORKING EXAMPLE 3** | **0.36** | **0.18** | **1.15** | **1.11** | **0.63** | **0.63** |
| **COMPARATIVE EXAMPLE 1** | **0.40** | **0.00** | **0.93** | **1.07** | **0.64** | **0.43** |
| **COMPARATIVE EXAMPLE 2** | **0.31** | **0.16** | **1.29** | **0.85** | **0.49** | **0.49** |

**[Table 2]**

| | **m** | **n** | **2m+0.5n** | **m+n** | **O/Si** |
|---|---|---|---|---|---|
| **WORKING EXAMPLE 1** | **0.674** | **0.569** | **1.632** | **1.243** | **1.11** |
| **WORKING EXAMPLE 2** | **0.768** | **0.324** | **1.698** | **1.092** | **1.08** |
| **WORKING EXAMPLE 3** | **0.463** | **0.464** | **1.158** | **0.927** | **1.15** |
| **COMPARATIVE EXAMPLE 1** | **0.548** | **0.000** | **1.096** | **0.548** | **0.93** |
| **COMPARATIVE EXAMPLE 2** | **0.322** | **0.324** | **0.806** | **0.646** | **1.29** |

**[Table 3]**

| | **Average particle size D50 (µm)** | **Carbon coating amount (mass %)** | **Initial efficiency (%)** | **Rate characteristic (%)** |
|---|---|---|---|---|
| **WORKING EXAMPLE 1** | **9.04** | **2.31** | **86.0** | **99.4** |
| **WORKING EXAMPLE 2** | **9.34** | **2.33** | **85.6** | **99.5** |
| **WORKING EXAMPLE 3** | **10.72** | **1.68** | **86.1** | **99.5** |
| **COMPARATIVE EXAMPLE 1** | **10.38** | **1.30** | **82.8** | **99.1** |
| **COMPARATIVE EXAMPLE 2** | **10.96** | **1.51** | **84.7** | **99.4** |

## Claims

1. A silicon-based composite containing a metallic element, comprising:
a silicon phase formed from silicon; and
a silicate phase adjacent to the silicon phase,
having a composition of LiₓMg_{y}SiO_{z} (x>0, y>0, z>0),
wherein the composition satisfies all of the following conditions: $\left(2.5x+2y\right) / z > 1 ,$ $\left(1.5x + y\right) / z < 1$and $\left(x + 2y\right) / z < 1 .$

2. The silicon-based composite containing a metallic element according to claim 1,
wherein 0.5 < z < 1.5 is satisfied.

3. The silicon-based composite containing a metallic element according to claim 1,
wherein x > 0.1 is satisfied, and $y > 0.05$ is satisfied.

4. The silicon-based composite containing a metallic element according to claim 1,
wherein the silicate phase does not contain Li₄SiO₄ and Li₂O as crystals.

5. The silicon-based composite containing a metallic element according to claim 1,
wherein at least a portion of the surface is covered with a conductive carbon coating.
